# EUROPEAN PATENT APPLICATION

(11) **EP 1 837 773 A1**
(43) Date of publication of application: **26.09.2007**
(21) Application number: 05820313.4
(22) Date of filing: 21.12.2005
(51) Int. Cl.: G06F 12/00

(54) **ELECTRONIC DEVICE, FORMAT DISCRIMINATION SYSTEM, AND FORMAT DISCRIMINATION METHOD**

(30) Priority: 22.12.2004 JP 2004370949
(71) Applicant: MATSUSHITA ELECTRIC INDUSTRIAL CO., LTD., Osaka 571-8501 (JP)
(72) Inventor: KUSAKA, Hiroya Mat. Elec. Ind. Co., Ltd., IPROC, Chuo-ku, Osaka-shi, Osaka 540-6319 (JP)
(74) Representative: Urner, Peter
(86) International application number: PCT/JP2005/023516
(87) International publication number: WO 2006/068190

(57) **Abstract**

[Problems]

To provide an electronic device for checking the logical format specifications of a recording medium by a nonvolatile semiconductor memory such as a flash EEPROM, and for warning a device user that the format specifications of a memory card do not consider the block constitution of the flash memory.

[Means for Solving the Problems]

The electronic device comprises a socket (2) for mounting a memory card (1), an I/F unit (3) for reading data from the memory card (1) mounted in the socket (2), a detector (4) for detecting a difference between the position of the boundary of blocks and the position of the boundary of clusters on the basis of the data of the memory card (1) read by the I/F unit (3), an information presenter (6) for displaying or notifying information in accordance with the detection result by the detector (4), and a controller (5) for controlling the process of reading the data from the memory card (1) by the I/F unit (3) and transmitting the detection result by the detector (4) to the information presenter (6).

## Description

### BACKGROUND OF THE INVENTION

### FIELD OF THE INVENTION

The present invention relates to an electronic device for checking logical format specifications of a recording medium by a nonvolatile semiconductor memory such as a flash EEPROM, a format discrimination system and a format discrimination method.

### DESCRIPTION OF THE RELATED ART

In recent years, there is increasingly made available an electronic device which records various data such as text data, video data and audio data created and edited in a personal computer (hereinafter, referred to as PC), video data such as a moving image and a still image and audio data recorded by a digital still camera in a memory card provided with a flash memory (flash EEPROM). The flash memory is a nonvolatile recording medium of block-erasing type comprising a plurality of blocks and capable of electrically erasing data recorded inside only per block. In relation to such an electronic device, it was proposed to record data in the flash memory according to the same format specifications as those of a data recording device in the PC in order to facilitate data compatibility between devices and data handling in the PC (for example, see the Patent Document 1).

More specifically, according to the example recited in the Patent Document 1, an obtained image, when recorded in the flash memory of the digital still camera, is managed according to the same format specifications as data file recording format specifications of the PC. Therefore, when the memory card, which is a data recording medium of the digital still camera, is set in an auxiliary recording device of the PC, the data can be directly accessed from the PC. Further, when the data is managed according to the data file recording format specifications of the PC, the data is managed by means of information such as an address at which the data recording starts on a logical memory space and a data size based on a file management information such as a file allocation table (hereinafter, referred to as FAT). Therefore, the recorded data can be easily searched, reproduced, copied, erased, or otherwise operated, in a manner similar to the data file operation on the PC. Further, the recorded data is, as a matter of course, recorded and managed per logical recording unit called cluster.

When the data is recorded in the flash memory; however, in order to write new data in a region where old data is already recorded, it is necessary to electrically erase the old data in the region before recording the new data therein, because the flash memory is basically a non-rewritable recording device. The necessity for the erasing process unfavorably reduces a recording speed of the flash memory.

Further, when positions of the logical recording unit (cluster) of the data determined by the data file recording format specifications and the electrical erasing unit (block) of the flash memory do not correspond, as described in [0005] - [0010] and Figs. 21 and 22 of the Patent Document 2, it becomes necessary to evacuate any irrelevant data when the data is updated or recorded, which lowers the data recording speed.

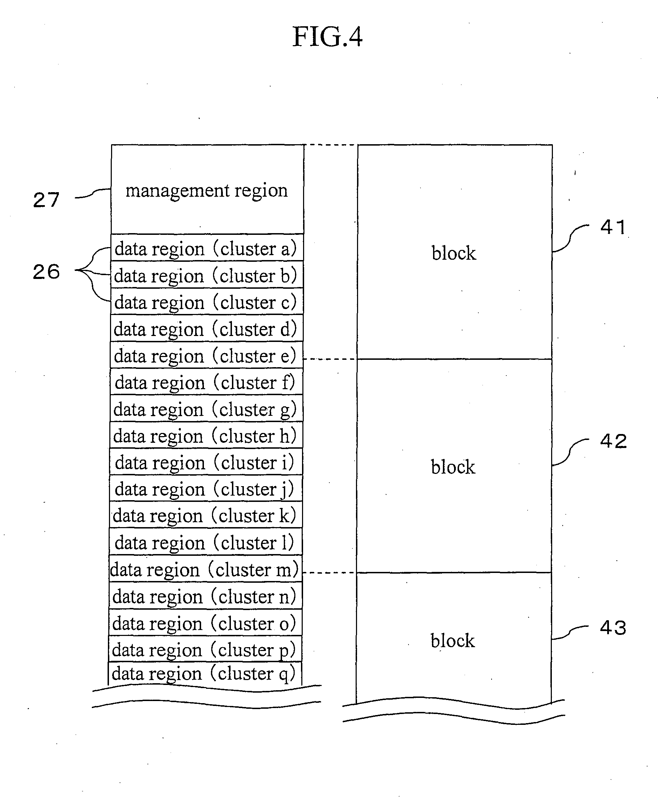

In order to prevent the recording speed from being reduced in the case where the cluster position and the block position do not correspond as described, it was proposed in the Patent Document 2 to provide a blank region in the file management information when the flash memory is formatted as shown in Fig. 4 in the document so that the positions of the cluster and the block are made consistent.

However, a block size of the flash memory tends to increase as a capacity of the flash memory is increasing in recent years, and the size of the cluster which is the logical recording unit and the block size are not always consistent. The block of the flash memory is generally designed to have a size of an integral multiple of a cluster size. Therefore, when such format specifications that one block corresponds to an integral number of clusters are adopted even though the sizes of the cluster and the block are not consistent, the reduction of the recording speed can be controlled. The reduction can be controlled because, when such format specifications that a particular cluster hypothetically corresponds to a plurality of blocks are adopted, it becomes necessary to evacuate the data, erase blocks, and perform other processing, in relation to the relevant plurality of blocks when the data in the cluster is updated, which consequently reduces the recording speed.
Patent Document 1: H04-212582 of the Japanese Patent Applications Laid-Open (Pages 1 - 5, Figs. 1 - 5)
Patent Document 2: H11-53248 of the Japanese Patent Applications Laid-Open (Page 3, Figs. 4, 21 and 22)

### PROBLEMS TO BE SOLVED BY THE INVENTION

However, there still exists a problem. The data is recorded in the flash memory according to the same format specifications as those of the data recording device of the PC in the electronic device which records the video data such as the moving image and the still image and the audio data in the memory card provided with the flash memory as described earlier in order to easily handle the data recorded on the memory card in the PC. However, because the data can be handled in the PC, the flash memory, that is, the memory card, may be often formatted in the PC. As a possibility in that case, the memory card which was formatted with consideration given to the erasing unit (block) of the flash memory as mentioned in the Patent Document 2 may be formatted again in the PC in such a manner that the positional relationship between the cluster and the block is lost. Because the PC executes the format processing based on its own format specifications depending on its operation system (hereinafter, referred to as OS), it is not possible to expect that such format processing as recited in the Patent document 2 is performed.

Therefore, the data recording speed with respect to the flash memory is possibly reduced when the memory card is formatted in the PC or the like. In any device which needs to record moving-image data having a large amount of data, such as a video movie, in real time, the data recording speed with respect to the flash memory may be insufficient. As a result, such inconveniences as the data omission and the halt of the recording operation may be quite possibly unavoidable.

Under the circumstances, a user of the device obtains the moving image in the video movie, for example, without the knowledge of the possibility of the data omission and the halt of the recording operation, and realize the insufficient recording speed of the flash memory only after the data omission or the halt of the recording operation actually occurs. However, any important imaging data has already been lost at the time, and the device user has to suffer heavily.

In order to solve the foregoing problem, a main object of the present invention is to provide an electronic device, a format discrimination system and a format discrimination method for judging whether or not format specifications of a flash memory are such format specifications that take into account a block configuration of the flash memory and presenting information to a device user in accordance with a result of the judgment to notify the device user of a possible recording speed insufficiency in advance, in a device in which a recording device such as the flash memory is used as a recording medium.

### MEANS FOR SOLVING THE PROBLEMS

An electronic device according to the present invention comprises:
a socket to which a recording medium comprising blocks electrically and collectively erasable and recording data per cluster as a logical recording unit provided by a file management information is attached;
an I/F unit for reading the data from the recording medium attached to the socket;
a detector for detecting a difference between a position of an inter-block boundary of the blocks and a position of an inter-cluster boundary of the clusters based on the data of the recording medium read by the I/F unit;
an information presenter for displaying or notifying information in accordance with a result of the detection by the detector; and
a controller for controlling the process of reading the data from the recording medium by the I/F unit and transmitting the information in accordance with the detection result by the detector to the information presenter.

The detector judges that the position of the inter-block boundary of the blocks and the position of the inter-cluster boundary of the clusters correspond when a size of the block of the recording medium is an integral multiple of a size of the cluster and a size of a management region of the recording medium is an integral multiple of the cluster size. Alternatively, the detector judges that the position of the inter-block boundary of the blocks and the position of the inter-cluster boundary of the clusters correspond when a leading position of a data region in the recording medium corresponds to a preset fixed value.

Accordingly, in the case where the format specifications of the recording medium are such format specifications that do no take into account the block configuration of the flash memory, the information can be displayed or notified to the device user so that the possible recording speed insufficiency can be previously informed.

The information presenter displays or notifies the detection result or a matter relating to the detection result based on the control by the controller when the detector judges that the position of the inter-block boundary and the position of the inter-cluster boundary do not correspond.

Accordingly, the detection result or the matter relating to the detection result can be displayed or notified to the device user in the case where the format specifications of the recording medium are such format specifications that do no take into account the block configuration of the flash memory. As a result, the possible recording speed insufficiency can be previously informed.

The information presenter displays or notifies a warning based on the control by the controller when the detector judges that the position of the inter-block boundary and the position of the inter-cluster boundary do not correspond.

Accordingly, the warning can be issued to the device user in the case where the format specifications of the recording medium are such format specifications that do no take into account the block configuration of the flash memory. As a result, the possible recording speed insufficiency can be previously informed.

### EFFECT OF THE INVENTION

According to the electronic device, format discrimination system and format discrimination method of the present invention, the information relating to the format specifications of the memory card are presented to the device user. In particular, the device user receives the warning in the case where the format specifications of the memory card are such format specifications that do no take into account the block configuration of the flash memory. As a result, when the memory card having the format specifications which do not take into account the block configuration of the flash memory is used, any inconvenience possibly experienced by the device user can be prevented from happening.

### BRIEF DESCRIPTION OF THE DRAWINGS

Fig. 1 is a block diagram of a format discrimination system according to a preferred embodiment of the present invention.
Fig. 2 is an illustration of format specifications of a memory card according to the preferred embodiment.
Fig. 3 is an illustration of format specifications of the memory card and a block configuration of a flash memory according to the preferred embodiment.
Fig. 4 is an illustration of format specifications of the memory card and a block configuration of the flash memory according to the preferred embodiment.
Fig. 5 is an example of information display by an information presenter according to the preferred embodiment.
Fig. 6 is an example of the information display by the information presenter according to the preferred embodiment.
Fig. 7 is an example of warning display by the information presenter according to the preferred embodiment.

### DESCRIPTION OF REFERENCE SYMBOLS

- 1: memory card (recording medium)
- 2: socket
- 3: card I/F unit
- 4: detector
- 5: system controller
- 6: information presenter
- 7: electronic device

### PREFERRED EMBODIMENT OF THE PRESENT INVENTION

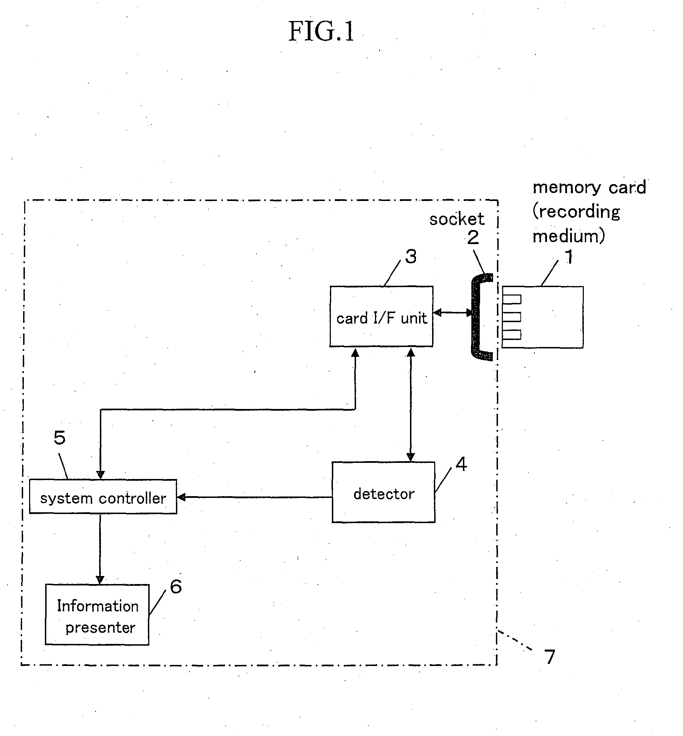

A preferred embodiment of the present invention is described referring to Figs. 1 through 7.

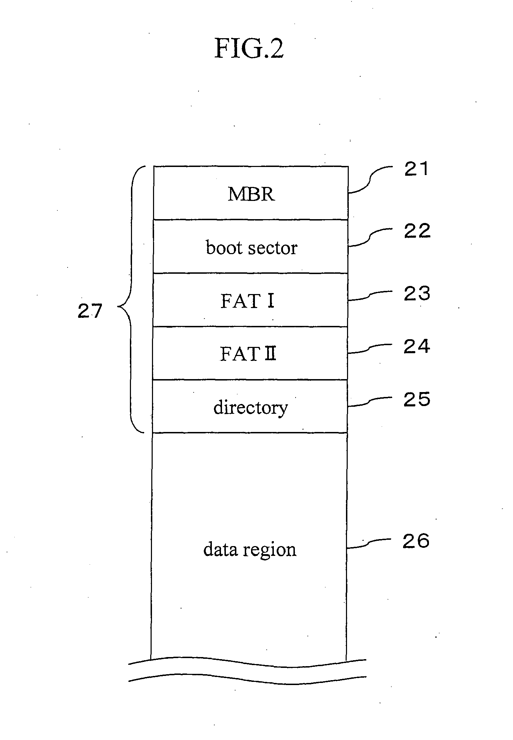

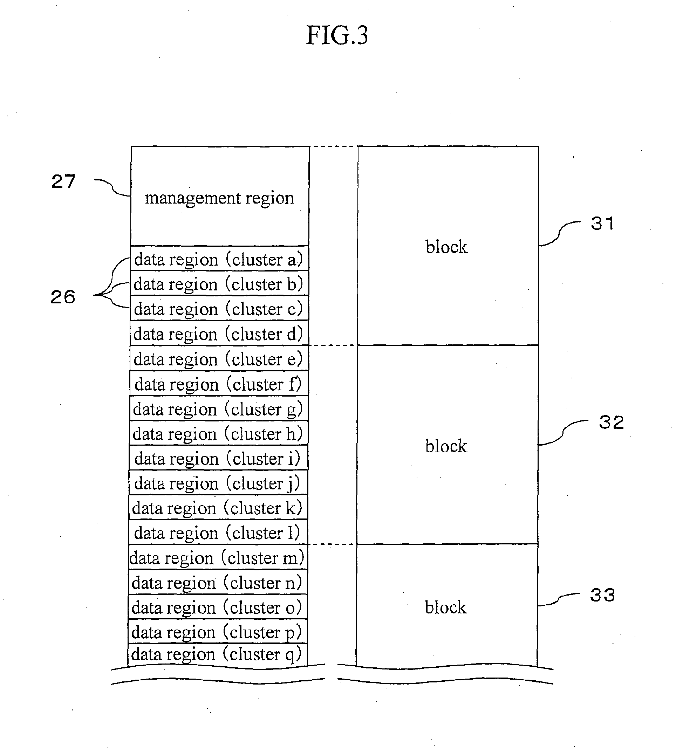

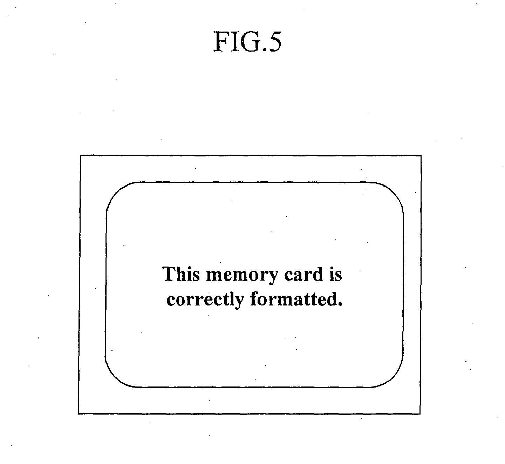

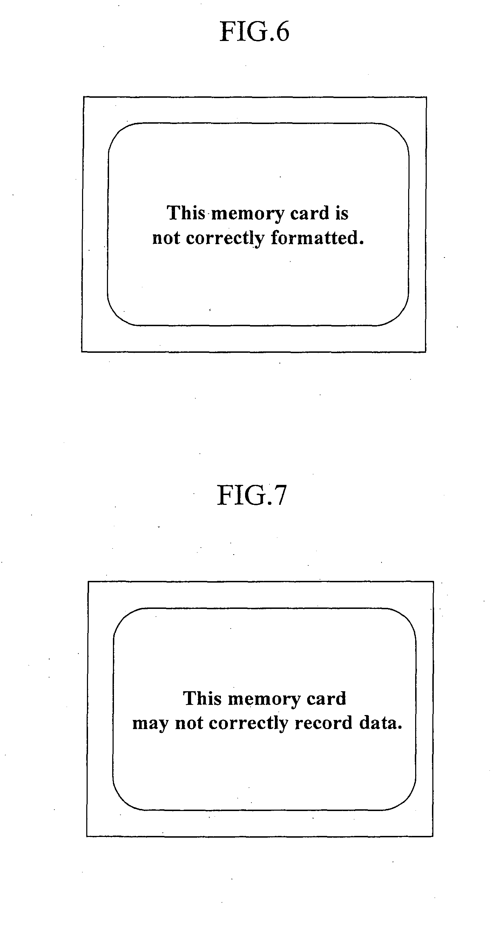

Fig. 1 is a block diagram of a format discrimination system. Fig. 2 is an illustration of format specifications of a memory card. Fig. 3 is an illustration of format specifications of the memory card and a block configuration of a flash memory. Fig. 4 is an illustration of format specifications of the memory card and a block configuration of the flash memory. Fig. 5 is an example of information display by an information presenter. Fig. 6 is an example of the information display by the information presenter. Fig. 7 is an example of warning display by the information presenter.

In Fig. 1, a memory card (recording medium) 1 is a detachable recording medium comprising therein a flash memory (flash EEPROM) capable of recording various data such as text data, video data and audio data, and audio data and video data recorded by a digital camera such as a moving image and a still image, and electrically connected to a card I/F unit 3 via a socket 2. The card I/F unit 3 reads data recorded in the memory card 1. A detector 4 detects information relating to a logical format of the memory card 1 from the data of the memory card 1 read via the card I/F unit 3. A system controller 5 controls the process of judging whether the memory card 1 is attached or detached and reading the data from the memory card 1 via the card I/F unit 3, and transmits information to the information presenter 6 in accordance with a result of the detection by the detector 4. The information presenter 6 is a display device such as a liquid crystal display device or CRT, or a notifying device such as a lighting device, for example, LED or a light, and presents the information based on the detection result by the detector 4 to the device user by displaying a character string, or lighting or blinking the LED. The components from the socket 2 through the information presenter 6 constitute an electronic device 7.

Fig. 2 shows an example of logical format specifications previously applied to the memory card. In the present preferred embodiment is given a description of the memory card 1 according to the FAT file system generally used as data file recording format specifications of PC, referring to only necessary parts thereof.

In Fig. 2, a block incorporated in the memory card 1 is divided into respective regions, which are, from the top thereof, MBR (Master Boot Record) 21, boot sector 22, FAT I 23, FAT II 24, directory 25 and data region 26. The MBR 21, boot sector 22, FAT I 23, FAT II 24 and director 25 are collectively called management region 27. In the MBR 21, information relating to a boot-strap loader for reading the OS program and respective partitions which can be provided in the memory card is memorized, and the information relating to the partitions and the like is memorized in the boot sector 22. The FAT I 23 is a region in which a management table showing how the clusters of the data region 26 are used is memorized. The FAT II 24 is to backup the FAT I23. In the directory 25, information such as file names, extensions, creation dates of data under a root directory is memorized. The data region 26 is a region in which main bodies of the various data such as text data, video data and audio data are recorded in the memory card 1.

Fig. 3 shows an example of a relationship between positions of the clusters in the data region 26 of the memory card 1 and positions of the blocks in the flash memory. In Fig. 3, the flash memory comprises a plurality of blocks including a block 31 and blocks thereafter, and the size of each block is eight times as large as the size of each cluster. In this case, the memory card has such format specifications that one block is mapped so as to correspond to eight clusters and a boundary of every eight clusters corresponds to a block boundary.

Fig. 4 also shows an example of the relationship between the positions of the clusters in the data region 2 6 of the memory card 1 and the positions of the blocks in the flash memory. The format specifications shown in Fig. 4 are similar to those shown in Fig. 3 in terms of the cluster and block sizes, however, different from those in Fig. 3 in that the inter-cluster boundary and the inter-block boundary do not correspond. In the case of such format specifications, it becomes necessary to evacuate the data recorded in two blocks, which are a block 41 and a block 42, and erase a plurality of blocks when data in an cluster e is updated because the clusters e and m are respectively mapped across the two blocks (blocks 41 and 42, and blocks 42 and 43). As a result, the recording speed may be unfavorably lowered.

As described, the size of each block is set to the size eight times as large as the size of the cluster in both of Figs. 3 and 4; however, the inter-cluster boundary and the inter-block boundary fail to correspond, as shown in Fig.4, depending on a size of the management region 27. More specifically, the boundaries correspond when the size of the management region 27 is also an integral multiple of the cluster size as shown in Fig. 3, while the boundaries fail to correspond when the size of the management region 27 is not the integral multiple of the cluster size as shown in Fig. 4.

First is described a case where the memory card 1 is formatted according to the format specifications shown in Fig. 3 in the foregoing constitution. The device user attaches the memory card 1 to the socket 2 shown in Fig. 1. The card I/F unit 3 detects the attachment of the memory card 1, and notifies it to the detector 4 and the system controller 5. The detector 4 receives the notification, and reads the information of the management region 27 recorded on the memory card 1 via the card I/F unit 3 and calculates the sizes of the cluster and the management region 27 from the information of the management region 27. When the size of the management region 27 is the integral multiple of the cluster size, it is judged that the blocks of the flash memory are mapped with respect to the integral number of clusters, and the boundary of a plurality of clusters and the block boundary are consistent in the format specifications of the memory card 1 as shown in Fig. 3. At the time, the block size may not necessarily have any particular size depending on the internal constitution of the memory card 1; however, a flash memory is generally designed and manufactured to have a block size which is an integral multiple of a cluster size or equal to the cluster size. Therefore, there is no problem in reaching the foregoing judgement result.

When the foregoing judgment result is rendered by the detector 4, the judgement result is transmitted to the system controller 5. The system controller 5 is notified of the judgment result, and presents to the device user, via the information presenter 6, that the format specifications of the inserted memory card are such format specifications that take into account the block configuration of the flash memory, for example, using a screen display as shown in Fig. 5.

Next is described a case where the memory card 1 is formatted according to the format specifications shown in Fig. 4. As described earlier, the detector 4 checks the format specifications after the memory card 1 is inserted. Then, the detector 4 judges that some clusters may be mapped across a plurality of blocks, in other words, the inter-cluster boundary may not be consistent with the inter-block boundary, when the size of the management region 27 is not an integral multiple of the cluster size as shown in Fig. 4, and the judgment result is notified to the system controller 5. The system controller 5 is notified of the judgment result, and presents to the device user via the information presenter 6 that the format specifications of the inserted memory card are not such format specifications that take into account the block configuration of the flash memory , for example, using a screen display as shown in Fig. 6. Such information that describes how the format is inappropriate, for example, the cluster size is incorrect or the leading address of the data region is incorrect, may be displayed as the matter relating to the inconsistency detection result. In the format specifications shown in Fig. 4, the reduction of the data recording speed is predicted, and such an inconvenience as the data omission can be thereby predicted. Therefore, a warning message as shown in Fig. 7 may be displayed.

According to the format discrimination system thus constituted, the detector 4 obtains the size of the management region 27 of the memory card 1 in order to judge if there is a difference between the inter-block boundary and the inter-cluster boundary so that whether or not the format specifications of the memory card 1 are such format specifications that take into account the block configuration of the flash memory can be judged. Then, the information relating to the format specifications of the memory card 1 can be presented to the device user via the information presenter 6 depending on the judgment result. In the case where the format specifications of the memory card 1 are not such format specifications that take into account the block configuration of the flash memory, the information or the warning is displayed or informed to the device user. Then, the device user can reformat the memory card 1 or replace it with another memory card. The memory card used for the replacement can be used, for example, for recording the moving image of the video movie so that the data omission in obtaining the moving image can be prevented from happening.

In the present preferred embodiment, it is judged whether or not the inter-block boundary and the inter-cluster boundary are different in terms of a position based on the size of the management region 27. The present prevention is not limited to thereto. As an alternative manner, the constitution is such that a leading address of the data region 26 is obtained from the information recited in the management region 27, based on which it is judged whether or not the inter-block boundary and the inter-cluster boundary are different in terms of a position. More specifically, the detector 4 memorizes, in advance, the leading address of the data region 26 in the format specifications which take into account the block configuration of the flash memory. Then, the detector 4 can judges that the inter-block boundary and the inter-cluster boundary correspond when the memorized address and an actual leading address in the memory card 1 are consistent.

In the present preferred embodiment, the information presenter 6 displays the message. The present invention is not limited to thereto. As an alternative manner, the constitution is such that the device user is notified of the information in such a manner that LED is blinked, a lamp mounted on the device for warning, or the like, is turned on, or any of audio equipment such as a buzzer is used. Further, the contents of the displayed information by the information presenter 6 is not limited to those shown in Figs. 5 and 7, and may be the detection result by the detector 4 or the matter or warning relating to the detection result.

Further, the format specifications of the memory card 1 are not limited to the FAT file system, and may be any format specifications as long as their physical logical memory region is managed per logical management unit.

### INDUSTRIAL APPLICABILITY

An electronic device, a format discrimination system, and a format discrimination method according to the present invention are useful as a device, a system and a method for checking format specifications of a memory card comprising a flash memory or the like.

## Claims

1. An electronic device comprising:
a socket to which a recording medium comprising blocks electrically and collectively erasable and recording data per cluster as a logical recording unit provided by a file management information is attached;
an I/F unit for reading the data from the recording medium attached to the socket;
a detector for detecting a difference between a position of an inter-block boundary of the blocks and a position of an inter-cluster boundary of the clusters based on the data of the recording medium read by the I/F unit;
an information presenter for displaying or notifying information in accordance with a result of the detection by the detector; and
a controller for controlling the process of reading the data from the recording medium by the I/F unit and transmitting the information in accordance with the detection result by the detector to the information presenter.

2. The electronic device as claimed in Claim 1, wherein
the detector judges that the position of the inter-block boundary of the blocks and the position of the inter-cluster boundary of the clusters correspond when a size of the block of the recording medium is an integral multiple of a size of the cluster and a size of a management region of the recording medium is an integral multiple of the cluster size.

3. The electronic device as claimed in Claim 1, wherein
the detector judges that the position of the inter-block boundary of the blocks and the position of the inter-cluster boundary of the clusters correspond when a leading position of a data region in the recording medium corresponds to a preset fixed value.

4. The electronic device as claimed in Claim 1, wherein
the information presenter displays or notifies the detection result or a matter relating to the detection result based on the control by the controller when the detector judges that the position of the inter-block boundary and the position of the inter-cluster boundary do not correspond.

5. The electronic device as claimed in Claim 1, wherein
the information presenter displays or notifies a warning based on the control by the controller when the detector judges that the position of the inter-block boundary and the position of the inter-cluster boundary do not correspond.

6. A format discrimination system comprising:
a recording medium comprising blocks electrically and collectively erasable and recording data per cluster as a logical recording unit provided by a file management information;
a detector for detecting a difference between a position of an inter-block boundary of the blocks and a position of an inter-cluster boundary of the clusters; and
an information presenter for displaying or notifying information in accordance with a result of the detection by the detector.

7. The format discrimination system as claimed in Claim 6, wherein
the detector judges that the position of the inter-block boundary of the blocks and the position of the inter-cluster boundary of the clusters correspond when a size of the block of the recording medium is an integral multiple of a size of the cluster and a size of a management region of the recording medium is an integral multiple of the cluster size.

8. The format discrimination system as claimed in Claim 6, wherein
the detector judges that the position of the inter-block boundary of the blocks and the position of the inter-cluster boundary of the clusters correspond when a leading position of a data region in the recording medium corresponds to a preset fixed value.

9. The format discrimination system as claimed in Claim 6, wherein
the information presenter displays or notifies the detection result or a matter relating to the detection result based on the control by the controller when the detector judges that the position of the inter-block boundary and the position of the inter-cluster boundary do not correspond.

10. The format discrimination system as claimed in Claim 6, wherein
the information presenter displays or notifies a warning based on the control by the controller when the detector judges that the position of the inter-block boundary and the position of the inter-cluster boundary do not correspond.

11. A format discrimination method, wherein:
data is read from a recording medium comprising blocks electrically and collectively erasable and recording data per cluster as a logical recording unit provided by a file management information;
a difference between a position of an inter-block boundary of the blocks and a position of an inter-cluster boundary of the clusters is detected based on the data read from the recording medium; and
an information in accordance with a result of the detection is displayed or notified.

12. The format discrimination method as claimed in Claim 11, wherein
it is judged that the position of the inter-block boundary of the blocks and the position of the inter-cluster boundary of the clusters correspond when a size of the block of the recording medium is an integral multiple of a size of the cluster and a size of a management region of the recording medium is an integral multiple of the cluster size.

13. The format discrimination method as claimed in Claim 11, wherein
it is judged that the position of the inter-block boundary of the blocks and the position of the inter-cluster boundary of the clusters correspond when a leading position of a data region in the recording medium corresponds to a preset fixed value.

14. The format discrimination method as claimed in Claim 11, wherein
the detection result or a matter relating to the detection result is displayed or notified when it is judged that the position of the inter-block boundary and the position of the inter-cluster boundary do not correspond.

15. The format discrimination method as claimed in Claim 11, wherein
a warning is displayed or notified when it is judged that the position of the inter-block boundary and the position of the inter-cluster boundary do not correspond.
